(19) Europäisches Patentamt
European Patent Office
Office européen des brevets

(11) EP 3 008 023 B1

(12) **FASCICULE DE BREVET EUROPEEN**

(45) Date de publication et mention de la délivrance du brevet:
**09.08.2017 Bulletin 2017/32**

(21) Numéro de dépôt: **14735625.7**

(22) Date de dépôt: **13.06.2014**

(51) Int Cl.:
***C03C 17/00*** (2006.01) ***C03C 17/42*** (2006.01)
***G02B 1/10*** (2015.01) ***G02B 1/11*** (2015.01)

(86) Numéro de dépôt international:
**PCT/FR2014/051463**

(87) Numéro de publication internationale:
**WO 2014/199103 (18.12.2014 Gazette 2014/51)**

(54) **ARTICLE REVÊTU D'UNE COUCHE DE NATURE SILICO-ORGANIQUE AMÉLIORANT LES PERFORMANCES D'UN REVÊTEMENT EXTERNE**

ARTIKEL, DER ZUR VERBESSERUNG DER LEISTUNG DER ÄUSSEREN BESCHICHTUNG MIT EINEM SILICIUM/EINER ORGANISCHEN SCHICHT BESCHICHTET IST

ITEM COATED WITH A SILICON/ORGANIC LAYER IMPROVING THE PERFORMANCES OF AN OUTER COATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2013 FR 1355604**

(43) Date de publication de la demande:
**20.04.2016 Bulletin 2016/16**

(73) Titulaire: **Essilor International (Compagnie Générale d'Optique)**
**94220 Charenton-le-Pont (FR)**

(72) Inventeurs:
- **CHIAROTTO, Sébastien**
  **F-94220 Charenton-le-pont (FR)**
- **FAURE, Bruce**
  **F-94220 Charenton-le-pont (FR)**
- **PEGA, Stéphanie**
  **F-94220 Charenton-le-pont (FR)**
- **SCHERER, Karin**
  **F-94220 Charenton-le-pont (FR)**

(74) Mandataire: **Jacobacci Coralis Harle**
**32, rue de l'Arcade**
**75008 Paris (FR)**

(56) Documents cités:
**WO-A1-95/23652**
**WO-A1-2013/098531**
**US-A1- 2004 157 061**
**US-A1- 2010 003 508**
**US-A1- 2010 200 541**
**US-A1- 2012 013 845**
**US-B2- 6 919 134**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 008 023 B1

## Description

La présente invention concerne d'une manière générale un article, de préférence un article d'optique, notamment une lentille ophtalmique, possédant un revêtement externe, de préférence un revêtement antisalissure, dont la performance est améliorée par la présence d'une couche sous-jacente, ainsi qu'un procédé de préparation d'un tel article. L'article possède en outre des propriétés thermomécaniques améliorées et une aptitude limitée à développer dans le temps des défauts cosmétiques.

Les articles d'optique comportent le plus souvent une couche extérieure qui modifie l'énergie de surface, par exemple un revêtement hydrophobe et/ou oléophobe antisalissure, bien connu dans la technique et généralement associé à des revêtements antireflet. Il s'agit le plus souvent de matériaux de type fluorosilane, qui diminuent l'énergie de surface afin d'éviter l'adhérence de souillures grasses qu'il est ainsi plus facile d'éliminer.

La demande PCT/FR 12053092, au nom du demandeur, décrit un article comprenant un substrat ayant au moins une surface principale revêtue d'un revêtement interférentiel multicouche, ledit revêtement comprenant une couche A non formée à partir de composés précurseurs inorganiques ayant un indice de réfraction inférieur ou égal à 1,55, qui constitue :

- ◦ soit la couche externe du revêtement interférentiel,
- ◦ soit une couche intermédiaire, directement en contact avec la couche externe du revêtement interférentiel, cette couche externe du revêtement interférentiel étant dans ce second cas une couche additionnelle ayant un indice de réfraction inférieur ou égal à 1,55, et ladite couche A ayant été obtenue par dépôt, sous faisceau d'ions, d'espèces activées issues d'au moins un composé précurseur C sous forme gazeuse de nature silico-organique tel que l'octaméthylcyclotétrasiloxane.

Dans le cas où la couche A constitue la couche externe du revêtement interférentiel, il a été constaté que le revêtement antisalissure déposé directement sur cette couche A présentait des performances insuffisantes. Le fait de déposer une couche additionnelle, typiquement une couche de silice, entre la couche A et le revêtement antisalissure, permet d'améliorer la performance du revêtement antisalissure mais complique le procédé de dépôt mais diminue légèrement la résistance à la rayure et les propriétés d'adhésion par rapport au mode de réalisation précédent.

C'est pourquoi, pour pleinement bénéficier des avantages que peut apporter la couche organique A, il serait souhaitable de pouvoir améliorer la performance du revêtement externe, en particulier d'un revêtement antisalissure, sans devoir intercaler une couche additionnelle entre la couche A et ce revêtement externe. Par ailleurs, l'utilisation de couches organiques A déposées par faisceau d'ions peut provoquer sur certains substrats l'apparition progressive de défauts cosmétiques blanchâtres et translucides, sous forme de points et de lignes s'étendant sur toute la surface des verres, visibles dans certaines conditions d'éclairage (lampe à arc et tensioscope). L'apparition de défauts cosmétiques sur l'article d'optique après sa préparation empêche sa commercialisation. Selon les substrats, ces défauts sont présents initialement ou se développent au bout d'une durée pouvant aller de quelques jours à quelques mois, au cours du port des lentilles ophtalmiques.

Dans la demande PCT/FR 12053092, l'apparition de ces défauts peut notamment être évitée en utilisant un débit d'argon pendant le dépôt de la couche A. Néanmoins, ceci présente l'inconvénient de devoir ajuster et contrôler le procédé pour s'assurer de l'absence de défauts cosmétiques. Il serait donc préférable de disposer d'un procédé de dépôt plus robuste et moins sensible au changement de paramètres.

Le brevet US 6,919,134 décrit un article d'optique comportant un revêtement antireflet comprenant au moins une couche dite "hybride" obtenues par co-évaporation d'un composé organique et d'un composé inorganique, qui lui confère une meilleure adhésion, une meilleure résistance thermique et une meilleure résistance à l'abrasion. Le revêtement antireflet comprend de préférence deux couches "hybrides" en position interne et externe. Ces couches sont généralement déposées par co-évaporation sous assistance ionique typiquement de silice et d'une huile de silicone modifiée.

La demande JP 2007-078780 décrit un verre de lunettes comportant un revêtement antireflet multicouche, dont la couche externe est une couche de bas indice de réfraction dite "organique". Cette couche est déposée par voie liquide (par centrifugation ou trempage), alors que les couches inorganiques du revêtement antireflet sont déposées par dépôt sous vide sous assistance ionique. La demande de brevet indique qu'un tel empilement antireflet possède une meilleure résistance thermique qu'un revêtement antireflet composé exclusivement de couches inorganiques. Ladite couche "organique" comprend de préférence un mélange de particules de silice et d'un liant organosilane tel que le γ-glycidoxypropyltriméthoxysilane.

La demande JP 05-323103 décrit l'incorporation d'un composé organique fluoré dans la dernière couche d'un empilement optique multicouche, comprenant des couches de $SiO_2$ et de $TiO_2$, en vue de la rendre hydrophobe et ainsi minimiser le changement de ses caractéristiques optiques provoqué par l'absorption d'eau. La couche fluorée est obtenue par dépôt en phase vapeur du matériau constitutif de la couche dans une atmosphère composée du précurseur fluoré,

qui peut être le tétrafluoroéthylène ou un fluoroalkyl silane.

Le problème de l'apparition de défauts cosmétiques et de la performance d'un revêtement externe n'a été abordé dans aucun des documents présentés ci-dessus.

Par ailleurs, lors du taillage et du montage d'un verre chez l'opticien, le verre subit des déformations mécaniques qui peuvent provoquer des fissures dans les revêtements interférentiels minéraux, en particulier lorsque l'opération n'est pas conduite avec soin. De façon similaire, des sollicitations en température (chauffage de la monture) peuvent provoquer des fissures dans le revêtement interférentiel. Selon le nombre et la taille des fissures, celles-ci peuvent gêner la vue pour le porteur et empêcher la commercialisation du verre. En outre, pendant le port de verres organiques traités, des rayures peuvent apparaître. Dans les revêtements interférentiels minéraux, certaines rayures entraînent des fissurations, rendant les rayures plus visibles à cause d'une diffusion de lumière.

Ainsi, un autre objectif de l'invention est l'obtention d'un revêtement, notamment un revêtement interférentiel, et en particulier antireflet, ayant des propriétés thermomécaniques améliorées, tout en conservant de bonnes propriétés d'adhérence, et qui par ailleurs ne développe pas (ou quasiment pas) au cours du temps de défauts cosmétiques. L'invention vise en particulier des articles possédant une température critique améliorée, c'est à dire, présentant une bonne résistance à la craquelure lorsqu'ils sont soumis à une élévation de température.

Les inventeurs ont en effet découvert qu'une modification de la nature de la couche déposée immédiatement en dessous du revêtement externe de l'article, qui, en optique ophtalmique, est généralement une couche de bas indice de réfraction d'un revêtement interférentiel (typiquement une couche de silice) en contact avec un revêtement antisalissure, permettait de remplir les objectifs fixés. Selon l'invention, cette couche est formée par dépôt sous un faisceau d'ions, d'espèces activées, sous forme gazeuse, obtenues de préférence exclusivement à partir de matériaux précurseurs de nature organique contenant au moins une liaison silicium-groupe hydrolysable, de préférence au moins une liaison hydrogène-silicium.

Les buts fixés sont donc atteints selon l'invention par un article comprenant un substrat ayant au moins une surface principale revêtue d'une couche A, ladite couche A étant en contact direct avec un revêtement B externe hydrophobe, et ayant été obtenue par dépôt, sous faisceau d'ions, d'espèces activées issues d'au moins un composé C, sous forme gazeuse, contenant dans sa structure :

- au moins un atome de carbone,
- au moins un atome d'hydrogène,
- au moins un groupe Si-X, où X est un groupe hydroxy ou un groupe hydrolysable choisi parmi les groupes H, halogène, alcoxy, aryloxy, acyloxy, $-NR^1R^2$ où $R^1$ et $R^2$ désignent indépendamment un atome d'hydrogène, un groupe alkyle ou un groupe aryle, et $-N(R^3)-Si$ où $R^3$ désigne un groupe alkyle ou un groupe aryle,
- et optionnellement au moins un atome d'azote et/ou au moins un atome d'oxygène,

ledit composé C n'étant ni le tétraméthyldisiloxane, ni le tétraéthoxysilane, ni le vinylméthyldiéthoxysilane, ni l'hexaméthylcyclotrisilazane, et ladite couche A n'étant pas formée à partir de composés précurseurs inorganiques.

L'invention sera décrite plus en détail en référence au dessin annexé, dans lequel la figure 1 est une représentation schématique de la déformation subie par le verre et de la façon dont est mesurée cette déformation D au cours du test de résistance à la courbure décrit en partie expérimentale.

Dans la présente demande, lorsqu'un article comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement qui (i) est positionné au-dessus du substrat, (ii) n'est pas nécessairement en contact avec le substrat (bien que préférentiellement, il le soit), c'est-à-dire qu'un ou plusieurs revêtements intermédiaires peuvent être disposés entre le substrat et le revêtement en question, et (iii) ne recouvre pas nécessairement le substrat complètement (bien que préférentiellement, il le recouvre). Lorsque "une couche 1 est localisée sous une couche 2", on comprendra que la couche 2 est plus éloignée du substrat que la couche 1.

L'article préparé selon l'invention comprend un substrat, de préférence transparent, ayant des faces principales avant et arrière, l'une au moins desdites faces principales comportant une couche A, de préférence les deux faces principales.

Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'oeil du porteur.

Bien que l'article selon l'invention puisse être un article quelconque, tel qu'un écran, un vitrage, des lunettes de protection utilisables notamment en environnement de travail, un miroir, ou un article utilisé en électronique, il constitue de préférence un article d'optique, mieux une lentille optique, et encore mieux une lentille ophtalmique, pour lunettes, ou une ébauche de lentille optique ou ophtalmique telle qu'une lentille optique semi-finie, en particulier un verre de

lunettes. La lentille peut être une lentille polarisée, colorée ou une lentille photochrome. Préférentiellement, la lentille ophtalmique selon l'invention présente une transmission élevée.

La couche A selon l'invention peut être formée sur au moins l'une des faces principales d'un substrat nu, c'est-à-dire non revêtu, ou sur au moins l'une des faces principales d'un substrat déjà revêtu d'un ou plusieurs revêtements fonctionnels.

Le substrat de l'article selon l'invention est de préférence un verre organique, par exemple en matière plastique thermoplastique ou thermodurcissable. Ce substrat peut être choisi parmi les substrats cités dans la demande WO 2008/062142, par exemple un substrat obtenu par (co)polymérisation du bis allyl carbonate du diéthylèneglycol, un substrat en poly(thio)uréthane ou un substrat en polycarbonate de bis(phénol A) (thermoplastique) PC.

Avant le dépôt de la couche A sur le substrat éventuellement revêtu, par exemple d'un revêtement anti-abrasion et/ou anti-rayures, il est courant de soumettre la surface dudit substrat, éventuellement revêtue, à un traitement d'activation physique ou chimique, destiné à augmenter l'adhésion de la couche A. Ce prétraitement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau ou solvant organique). Plusieurs de ces traitements peuvent être combinés. Grâce à ces traitements de nettoyage, la propreté et la réactivité de la surface du substrat sont optimisées.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le prétraitement préféré de la surface du substrat est un traitement par bombardement ionique, effectué au moyen d'un canon à ions, les ions étant des particules constituées d'atomes de gaz dont on a extrait un ou plusieurs électron(s). On utilise de préférence en tant que gaz ionisé l'argon (ions $Ar^+$), mais également l'oxygène, ou leurs mélanges, sous une tension d'accélération allant généralement de 50 à 200 V, une densité de courant généralement comprise entre 10 et 100 $\mu A/cm^2$ sur la surface activée, et généralement sous une pression résiduelle dans l'enceinte à vide pouvant varier de $8.10^{-5}$ mbar à $2.10^{-4}$ mbar.

L'article selon l'invention comporte une couche A, qui constitue de préférence un revêtement interférentiel monocouche ou la couche externe d'un revêtement multicouche, préférentiellement un revêtement interférentiel multicouche, c'est-à-dire la couche du revêtement (interférentiel) la plus éloignée du substrat dans l'ordre d'empilement. Ledit revêtement interférentiel est formé de préférence sur un revêtement anti-abrasion. Les revêtements anti-abrasion préférés sont des revêtements à base d'hydrolysats d'époxysilane comportant au moins deux groupements hydrolysables, de préférence au moins trois, liés à l'atome de silicium. Les groupements hydrolysables préférés sont des groupements alkoxysilane.

Le revêtement interférentiel peut être tout revêtement interférentiel classiquement utilisé dans le domaine de l'optique, en particulier de l'optique ophtalmique, excepté le fait qu'il comporte une couche A externe formée par dépôt, sous un faisceau d'ions d'espèces activées issues d'un dérivé organique, de préférence un hydrure de silicium, sous forme gazeuse. Le revêtement interférentiel peut être, sans limitation, un revêtement antireflet, un revêtement réfléchissant (miroir), un filtre infrarouge ou un filtre ultraviolet, de préférence un revêtement antireflet.

Un revêtement antireflet se définit comme un revêtement, déposé à la surface d'un article, qui améliore les propriétés anti-réfléchissantes de l'article final. Il permet de réduire la réflexion de la lumière à l'interface article-air sur une portion relativement large du spectre visible.

Comme cela est bien connu, les revêtements interférentiels, de préférence les revêtements antireflet, comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI).

Dans la présente demande, une couche du revêtement interférentiel est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un revêtement interférentiel est dite couche de bas indice de réfraction lorsque son indice de réfraction est inférieur ou égal à 1,55, de préférence inférieur ou égal à 1,50, mieux inférieur ou égal à 1,45. Sauf indication contraire, les indices de réfraction auxquels il est fait référence dans la présente invention sont exprimés à 25 °C pour une longueur d'onde de 630 nm.

Les couches HI sont des couches de haut indice de réfraction classiques, bien connues dans la technique. Elles comprennent généralement un ou plusieurs oxydes minéraux tels que, sans limitation, la zircone ($ZrO_2$), l'oxyde de titane ($TiO_2$), le pentoxyde de tantale ($Ta_2O_5$), l'oxyde de néodyme ($Nd_2O_5$), l'oxyde d'hafnium ($HfO_2$), l'oxyde de praséodyme ($Pr_2O_3$), le titanate de praséodyme ($PrTiO_3$), $La_2O_3$, $Nb_2O_5$, $Y_2O_3$, l'oxyde d'indium $In_2O_3$, ou l'oxyde d'étain $SnO_2$. Les matériaux préférés sont $TiO_2$, $Ta_2O_5$, $PrTiO_3$, $ZrO_2$, $SnO_2$, $In_2O_3$ et leurs mélanges.

Les couches BI sont également bien connues et peuvent comprendre, sans limitation, $SiO_2$, $MgF_2$, $ZrF_4$, de l'alumine ($Al_2O_3$) en faible proportion, $AlF_3$, et leurs mélanges, de préférence $SiO_2$. On peut également utiliser des couches SiOF ($SiO_2$ dopée au fluor). Idéalement, le revêtement interférentiel de l'invention ne comprend aucune couche comprenant un mélange de silice et d'alumine.

Généralement, les couches HI ont une épaisseur physique variant de 10 à 120 nm, et les couches BI ont une épaisseur physique variant de 10 à 100 nm.

Préférentiellement, l'épaisseur totale du revêtement interférentiel est inférieure à 1 micromètre, mieux inférieure ou égale à 800 nm et mieux encore inférieure ou égale à 500 nm. L'épaisseur totale du revêtement interférentiel est généralement supérieure à 100 nm, de préférence supérieure à 150 nm.

De préférence encore, le revêtement interférentiel, qui est de préférence un revêtement antireflet, comprend au moins deux couches de bas indice de réfraction (BI) et au moins deux couches de haut indice de réfraction (HI). Préférentiellement, le nombre total de couches du revêtement interférentiel est inférieur ou égal à 8, mieux inférieur ou égal à 6.

Il n'est pas nécessaire que les couches HI et BI soient alternées dans le revêtement interférentiel, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

De préférence, toutes les couches de bas indice de réfraction du revêtement interférentiel selon l'invention sont de nature inorganique à l'exception de la couche A (c'est à dire que les autres couches de bas indice de réfraction du revêtement interférentiel ne contiennent de préférence pas de composé organique).

De préférence, toutes les couches du revêtement interférentiel selon l'invention sont de nature inorganique, à l'exception de la couche A, ce qui signifie que la couche A constitue de préférence la seule couche de nature organique du revêtement interférentiel de l'invention (les autres couches du revêtement interférentiel ne contenant de préférence pas de composé organique).

Selon un mode de réalisation de l'invention, le revêtement interférentiel comprend une sous-couche. Elle constitue dans ce cas généralement la première couche de ce revêtement interférentiel dans l'ordre de dépôt des couches, c'est-à-dire la couche du revêtement interférentiel qui est au contact du revêtement sous-jacent (qui est généralement un revêtement anti-abrasion et/ou anti-rayures) ou du substrat, lorsque le revêtement interférentiel est directement déposé sur le substrat.

Par sous-couche du revêtement interférentiel, on entend un revêtement d'épaisseur relativement importante, utilisé dans le but d'améliorer la résistance à l'abrasion et/ou aux rayures dudit revêtement et/ou de promouvoir son adhésion au substrat ou au revêtement sous-jacent. La sous-couche selon l'invention peut être choisie parmi les sous-couches décrites dans la demande WO 2010/109154. Préférentiellement, la sous-couche a une épaisseur de 100 à 200 nm. Elle est préférentiellement de nature exclusivement minérale et est préférentiellement constituée de silice $SiO_2$.

L'article de l'invention peut être rendu antistatique grâce à l'incorporation, dans le revêtement interférentiel, d'au moins une couche électriquement conductrice. Par "antistatique", on entend la propriété de ne pas retenir et/ou développer une charge électrostatique appréciable. Un article est généralement considéré comme ayant des propriétés antistatiques acceptables lorsqu'il n'attire et ne fixe pas la poussière et les petites particules après que l'une de ses surfaces a été frottée au moyen d'un chiffon approprié.

La couche électriquement conductrice peut être localisée à différents endroits du revêtement interférentiel, pourvu que ses propriétés anti-réfléchissantes ne soient pas perturbées. Elle peut par exemple être déposée sur la sous-couche du revêtement interférentiel, si elle est présente. Elle est de préférence localisée entre deux couches diélectriques du revêtement interférentiel, et/ou sous une couche de bas indice de réfraction du revêtement interférentiel.

La couche électriquement conductrice doit être suffisamment fine pour ne pas altérer la transparence du revêtement interférentiel. Généralement, son épaisseur varie de 0,1 à 150 nm, mieux de 0,1 à 50 nm, selon sa nature. Une épaisseur inférieure à 0,1 nm ne permet généralement pas d'obtenir une conductivité électrique suffisante, alors qu'une épaisseur supérieure à 150 nm ne permet généralement pas d'obtenir les caractéristiques de transparence et de faible absorption requises.

La couche électriquement conductrice est de préférence fabriquée à partir d'un matériau électriquement conducteur et hautement transparent. Dans ce cas, son épaisseur varie de préférence de 0,1 à 30 nm, mieux de 1 à 20 nm et encore mieux de 2 à 15 nm. La couche électriquement conductrice comprend de préférence un oxyde métallique choisi parmi les oxydes d'indium, d'étain, de zinc et leurs mélanges. L'oxyde d'étain-indium ($In_2O_3$:Sn, oxyde d'indium dopé à l'étain) et l'oxyde d'indium ($In_2O_3$), ainsi que l'oxyde d'étain $SnO_2$ sont préférés. Selon un mode de réalisation optimal, la couche électriquement conductrice et optiquement transparente est une couche d'oxyde d'étain-indium, notée couche d'ITO.

Généralement, la couche électriquement conductrice contribue à l'obtention de propriétés anti-réfléchissantes et constitue une couche de haut indice de réfraction dans le revêtement interférentiel. C'est le cas de couches fabriquées à partir d'un matériau électriquement conducteur et hautement transparent telles que les couches d'ITO.

La couche électriquement conductrice peut également être une couche d'un métal noble (Ag, Au, Pt, etc.) de

très faible épaisseur, typiquement de moins de 1 nm d'épaisseur, mieux de moins de 0,5 nm.

Les différentes couches du revêtement interférentiel (dont fait partie la couche antistatique optionnelle) autres que la couche A sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

De préférence, le dépôt de chacune des couches du revêtement interférentiel est réalisé par évaporation sous vide.

La couche A constitue de préférence une couche de bas indice de réfraction au sens de l'invention, ayant un indice de réfraction $\leq$ 1,55. De préférence, selon des modes de réalisation de l'invention, l'indice de réfraction de la couche A est supérieur ou égal à 1,45, mieux supérieur ou égal à 1,47, mieux encore supérieur ou égal à 1,48 et idéalement supérieur ou égal à 1,49.

La couche A est obtenue par dépôt, sous faisceau d'ions, d'espèces activées issues d'au moins un composé C, sous forme gazeuse, contenant dans sa structure au moins un groupe Si-X, où X est un groupe hydroxy ou un groupe hydrolysable choisi parmi les groupes H, halogène, alcoxy, aryloxy, acyloxy, $-NR^1R^2$ où $R^1$ et $R^2$ désignent indépendamment un atome d'hydrogène, un groupe alkyle ou un groupe aryle, et $-N(R^3)-Si$ où $R^3$ désigne un groupe alkyle ou un groupe aryle, au moins un atome de carbone, au moins un atome d'hydrogène, et, optionnellement au moins un atome d'azote et/ou au moins un atome d'oxygène, ledit composé C n'étant pas ni le tétraméthyldisiloxane, ni le tétraéthoxysilane, ni le vinylméthyldiéthoxysilane, ni l'hexaméthylcyclotrisilazane.

De préférence, le composé C n'est ni le 1,2,3,4,5,6-hexaméthylcyclotrisilazane, ni le 2,2,4,4,6,6-hexaméthylcyclotrisilazane. La définition des groupes $-NR^1R^2$ et $-N(R^3)-Si$ indiquée ci-dessus exclut naturellement des composés tels que l'hexaméthyldisilazane.

De préférence, le dépôt est effectué dans une enceinte à vide, comportant un canon à ions dirigé vers les substrats à revêtir, qui émet vers ceux-ci un faisceau d'ions positifs générés dans un plasma au sein du canon à ions. Préférentiellement les ions issus du canon à ions sont des particules constituées d'atomes de gaz dont on a extrait un ou plusieurs électron(s), et formés à partir d'un gaz rare, d'oxygène ou d'un mélange de deux ou plus de ces gaz.

Un précurseur, le composé C, est introduit dans un état gazeux dans l'enceinte à vide, de préférence en direction du faisceau d'ions et est activé sous l'effet du canon à ions.

Sans vouloir être limité par une quelconque théorie, les inventeurs pensent que le plasma du canon à ions se projette dans une zone située à une certaine distance à l'avant du canon, sans toutefois atteindre les substrats à revêtir et qu'une activation/dissociation du composé précurseur C se produit préférentiellement dans cette zone, et d'une manière générale à proximité du canon à ions et dans une moindre mesure dans le canon à ions.

Cette technique de dépôt utilisant un canon à ions et un précurseur gazeux, parfois désignée par « ion beam déposition » est décrite notamment dans le brevet US 5508368.

Selon l'invention, de façon préférentielle, le seul endroit de l'enceinte où un plasma est généré est le canon à ions.

Les ions peuvent faire l'objet, le cas échéant, d'une neutralisation avant la sortie du canon à ions. Dans ce cas, le bombardement sera toujours considérés comme ionique. Le bombardement ionique provoque un réarrangement atomique et une densification dans la couche en cours de dépôt, ce qui permet de la tasser pendant qu'elle est en train d'être formée.

Lors de la mise en oeuvre du procédé selon l'invention, la surface à traiter est préférentiellement bombardée par des ions, d'une densité de courant généralement comprise entre 20 et 1000 $\mu A/cm^2$, préférentiellement entre 30 et 500 $\mu A/cm^2$, mieux entre 30 et 200 $\mu A/cm^2$ sur la surface activée et généralement sous une pression résiduelle dans l'enceinte à vide pouvant varier de $6.10^{-5}$ mbar à $2.10^{-4}$ mbar, préférentiellement de $8.10^{-5}$ mbar à $2.10^{-4}$ mbar. On utilise de préférence un faisceau d'ions argon et/ou oxygène. Lorsqu'un mélange d'argon et d'oxygène est employé, le ratio molaire $Ar / O_2$ est de préférence $\leq$ 1, mieux $\leq$ 0,75 et encore mieux $\leq$ 0,5. Ce ratio peut être contrôlé en ajustant les débits de gaz dans le canon à ions. Le débit d'argon varie de préférence de 0 à 30 sccm. Le débit d'oxygène $O_2$ varie de préférence de 5 à 30 sccm, et est d'autant plus grand que le débit de composé précurseur de la couche A est élevé.

Les ions du faisceau d'ions, préférentiellement issus d'un canon à ions, utilisés au cours du dépôt de la couche A ont de préférence une énergie allant de 75 à 150 eV, préférentiellement de 80 à 140 eV, mieux de 90 à 110 eV. Les espèces activées formées sont typiquement des radicaux ou des ions.

Selon la technique de l'invention, celle-ci se distingue d'un dépôt au moyen d'un plasma (par exemple par PECVD) en ce qu'elle implique un bombardement au moyen d'un faisceau d'ions de la couche A en cours de formation, émis de préférence par un canon à ions.

En plus du bombardement ionique lors du dépôt, il est possible d'effectuer un traitement par plasma concomitamment ou non au dépôt sous faisceau d'ions de la couche A. De préférence, le dépôt de la couche est effectué sans l'assistance d'un plasma au niveau des substrats.

Le dépôt de ladite couche A s'effectue en présence d'une source d'oxygène lorsque le composé C précurseur

ne contient pas (ou pas suffisamment) d'atomes d'oxygène et que l'on souhaite que la couche A contienne une certaine proportion d'oxygène. De même, le dépôt de ladite couche A s'effectue en présence d'une source d'azote lorsque le composé C précurseur ne contient pas (ou pas suffisamment) d'atomes d'azote et que l'on souhaite que la couche A contienne une certaine proportion d'azote.

Outre la couche A, d'autres couches du revêtement interférentiel peuvent être déposées sous faisceau d'ions. L'évaporation des matériaux précurseurs de la couche A, conduite sous vide, peut être réalisée en utilisant une source thermique à effet Joule.

Le matériau précurseur de la couche A comprend au moins un composé C, qui est de nature organique, contenant dans sa structure au moins un groupe Si-X, où X est un groupe hydroxy ou un groupe hydrolysable choisi parmi les groupes H, halogène, alcoxy, aryloxy, acyloxy, $-NR^1R^2$ où $R^1$ et $R^2$ désignent indépendamment un atome d'hydrogène, un groupe alkyle ou un groupe aryle, et $-N(R^3)-Si$ où $R^3$ désigne un groupe alkyle ou un groupe aryle, au moins un atome de carbone, au moins un atome d'hydrogène, et, optionnellement au moins un atome d'azote et/ou au moins un atome d'oxygène, ledit composé C n'étant ni le tétraméthyldisiloxane, ni le tétraéthoxysilane, ni le vinylméthyldiéthoxysilane, ni l'hexaméthylcyclotrisilazane.

Le composé C contient de préférence dans sa structure au moins un groupe Si-H, c'est-à-dire constitue un hydrure de silicium. De préférence, l'atome de silicium du groupe Si-X n'est pas lié à plus de deux groupes non hydrolysables tels que des groupes alkyle ou aryle.

Parmi les groupes X, les groupes acyloxy ont pour formule $-O-C(O)R^4$ où $R^4$ est un groupe aryle préférentiellement en C6-C12, éventuellement substitué par un ou plusieurs groupes fonctionnels, ou alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les groupes aryloxy et alcoxy ont pour formule $-O-R^5$ où $R^5$ est un groupe aryle préférentiellement en C6-C12, éventuellement substitué par un ou plusieurs groupes fonctionnels, ou alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les halogènes sont préférentiellement F, Cl, Br ou I, les groupes X de formule $-NR^1R^2$ peuvent désigner un groupe amino $NH_2$, alkylamino, arylamino, dialkylamino, diarylamino, $R^1$ et $R^2$ désignant indépendamment un atome d'hydrogène, un groupe aryle préférentiellement en C6-C12, éventuellement substitué par un ou plusieurs groupes fonctionnels, ou un groupe alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les groupes X de formule $-N(R^3)-Si$ sont rattachés à l'atome de silicium par l'intermédiaire de leur atome d'azote et leur atome de silicium comporte naturellement trois autres substituants, où $R^3$ désigne un groupe aryle préférentiellement en C6-C12, éventuellement substitué par un ou plusieurs groupes fonctionnels, ou un groupe alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle.

Le groupe acyloxy préféré est le groupe acétoxy. Le groupe aryloxy préféré est le groupe phénoxy. Le groupe halogène préféré est le groupe Cl. Les groupes alcoxy préférés sont les groupes méthoxy et éthoxy.

De préférence, le composé C comprend au moins un atome d'azote et/ou au moins un atome d'oxygène, de préférence au moins un atome d'oxygène.

La concentration de chaque élément chimique dans la couche A (Si, O, C, H, N) peut être déterminée en utilisant la technique RBS (Rutherford Backscattering Spectrometry), et ERDA (Elastic Recoil Détection Analysis).

Le pourcentage atomique en atomes de carbone dans la couche A varie de préférence de 8 à 25 %, mieux de 15 à 25 %. Le pourcentage atomique en atomes d'hydrogène dans la couche A varie de préférence de 8 à 40 %, mieux de 10 à 20 %. Le pourcentage atomique en atomes de silicium dans la couche A varie de préférence de 5 à 30 %, mieux de 15 à 25 %. Le pourcentage atomique en atomes d'oxygène dans la couche A varie de préférence de 20 à 60 %, mieux de 35 à 45 %.

De préférence, le composé précurseur de la couche A comporte au moins un atome de silicium porteur d'au moins un groupe alkyle, de préférence en C1-C4, mieux au moins un atome de silicium porteur d'un ou de deux groupes alkyle identiques ou différents, de préférence en C1-C4, et d'un groupe X (de préférence un atome d'hydrogène) directement lié à l'atome de silicium, X ayant la signification indiquée précédemment. Le groupe alkyle préféré est le groupe méthyle. Le groupe vinyle peut également être utilisé à la place d'un groupe alkyle. De préférence, le composé C comporte au moins une liaison Si-C, mieux l'atome de silicium du groupe Si-X est directement lié à au moins un atome de carbone.

De préférence, chaque atome de silicium du composé C n'est pas lié directement à plus de deux groupes X, mieux n'est pas lié directement à plus d'un groupe X (de préférence un atome d'hydrogène), mieux, chaque atome de silicium du composé C est lié directement à un seul groupe X (de préférence un atome d'hydrogène). De préférence, le composé C comporte un ratio atomique Si/O égal à 1. De préférence, le composé C comporte un ratio atomique C/Si $<2$, préférentiellement $\leq 1,8$, mieux $\leq 1,6$ et mieux encore $\leq 1,5$, $\leq 1,3$ et de façon optimale égal à 1. De préférence

encore, le composé C comporte un ratio atomique C/O égal à 1. Selon un mode de réalisation, le composé C ne comporte pas de groupe Si-N, mieux ne comporte pas d'atome d'azote.

Le ou les atomes de silicium du composé précurseur de la couche A sont de préférence uniquement liés à des groupes alkyle, hydrogène et/ou des groupes comportant un chaînon -O-Si ou -NH-Si de façon à former un groupe Si-O-Si ou Si-NH-Si. Dans un mode de réalisation, le composé C comporte au moins un groupe Si-O-Si-X ou au moins un groupe Si-NH-Si-X, X ayant la signification indiquée précédemment et représentant de préférence un atome d'hydrogène.

Les composés précurseurs de la couche A préférés comportent un groupe Si-O-Si, mieux, un groupe de formule :

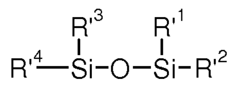

où $R'^1$ à $R'^4$ désignent indépendamment des groupes alkyle ou vinyle de préférence en C1-C4 (par exemple le groupe méthyle), des groupes aryle ou un groupe X (de préférence un atome d'hydrogène), l'un au moins de $R'^1$ à $R'^4$ désignant un groupe X (de préférence un atome d'hydrogène), X ayant la signification indiquée précédemment.

Selon un mode de réalisation préféré, le composé C est un polysiloxane cyclique de formule :

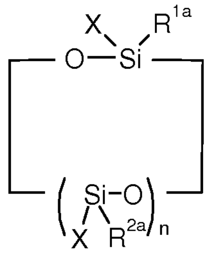

où X ayant la signification indiquée précédemment et représente de préférence un atome d'hydrogène, n désigne un entier allant de 2 à 20, de préférence de 3 à 8, $R^{1a}$ et $R^{2a}$ représentent indépendamment un groupe alkyle de préférence en C1-C4 (par exemple le groupe méthyle), vinyle, aryle ou un groupe hydrolysable. Des exemples non limitatifs de groupes hydrolysables pour $R^{1a}$ et $R^{2a}$ sont les groupes chloro, bromo, alcoxy, acyloxy, aryloxy, H. Les membres les plus courants appartenant à ce groupe sont les tétra-, penta- et hexa-alkylcyclotétrasiloxanes, de préférence les tétra-, penta- et hexa-méthylcyclotétrasiloxanes, le 2,4,6,8-tétraméthylcyclotétrasiloxane (TMCTS) étant le composé préféré. Dans certains cas, la couche A est issue d'un mélange d'un certain nombre de composés où n peut varier dans les limites indiquées ci-dessus.

Selon un autre mode de réalisation, le composé C est un alkylhydrosiloxane linéaire, mieux un méthylhydrosiloxane linéaire tel que par exemple le 1,1,1,3,5,7,7,7-octaméthyl tétrasiloxane, le 1,1,1,3,5,5,5-heptaméthyltrisiloxane, le 1,1,3,3,5,5-hexaméthyl trisiloxane.

Des exemples non-limitatifs de composés organiques précurseurs de la couche A, cycliques ou non cycliques, sont les composés suivants : le 2,4,6,8-tétraméthylcyclotétrasiloxane (TMCTS de formule (1)), le 2,4,6,8-tétraéthylcyclotétrasiloxane, le 2,4,6,8-tétraphénylcyclotétrasiloxane, le 2,4,6,8-tétraoctylcyclotétrasiloxane, le 2,2,4,6,6,8-hexaméthylcyclotétrasiloxane, le 2,4,6-triméthylcyclotrisiloxane, le cyclotétrasiloxane, le 1,3,5,7,9-pentaméthyl cyclopentasiloxane, le 2,4,6,8,10-hexaméthylcyclohexasiloxane, le 1,1,1,3,5,7,7,7-octaméthyl tétrasiloxane, le 1,1,3,3,5,5-hexaméthyltrisiloxane, le 1,1,1,3,5,5,5-heptaméthyl trisiloxane, le tris(trimethylsiloxy)silane (de formule (2)), le 1,1,3,3-tétraméthyldisilazane, le 1,2,3,4,5,6,7,8-octaméthylcyclotétrasilazane, le nonaméthyl trisilazane, le tris(diméthylsilyl)amine.

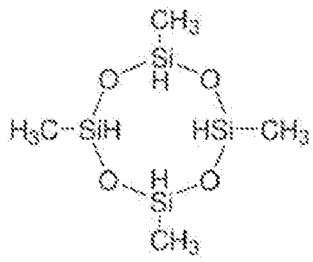
(1)

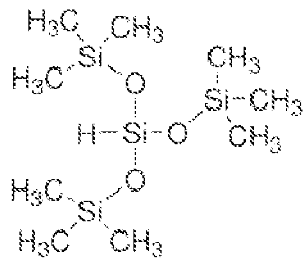
(2)

Le composé précurseur de la couche A est de préférence introduit dans l'enceinte à vide dans laquelle est réalisée la préparation des articles selon l'invention sous forme gazeuse, en contrôlant son débit. Ceci signifie qu'il n'est

de préférence pas vaporisé à l'intérieur de l'enceinte à vide. L'alimentation en composé précurseur de la couche A se situe à une distance de la sortie du canon à ions variant de préférence de 30 à 50 cm.

De préférence, la couche A ne comprend pas de composé fluoré. Selon l'invention, elle n'est pas formée à partir de composés précurseurs inorganiques (minéraux), en particulier, elle n'est pas formée à partir de précurseurs de nature oxyde métallique. Elle se distingue donc dans ce cas particulièrement des couches "hybrides" décrites dans le brevet US 6,919,134. De préférence, la couche A ne contient pas une phase distincte d'oxydes métalliques, mieux ne contient pas de composés inorganiques. Dans la présente demande, les oxydes de métalloïdes sont considérés comme étant des oxydes métalliques.

Le procédé permettant de former le revêtement interférentiel selon l'invention est donc beaucoup plus simple et moins coûteux que les procédés de co-évaporation d'un composé organique et d'un composé inorganique, comme par exemple celui décrit dans le brevet US 6,919,134. En pratique, les procédés de co-évaporation sont très difficiles à mettre en oeuvre, et difficiles à contrôler en raison de problèmes de reproductibilité. Les quantités respectives de composés organiques et inorganiques présents dans la couche déposée varient en effet beaucoup d'une manipulation à l'autre.

La couche A étant formée par dépôt sous vide, elle ne comprend pas d'hydrolysat de silane et se distingue donc des revêtements sol-gel obtenus par voie liquide.

La couche A possède de préférence une épaisseur allant de 20 à 150 nm, mieux de 25 à 120 nm. Lorsqu'elle constitue la couche externe d'un revêtement interférentiel, la couche A a préférentiellement une épaisseur allant de 60 à 100 nm.

D'autres propriétés à prendre en compte lors de la conception d'un empilement selon l'invention, par exemple un revêtement interférentiel, sont les contraintes mécaniques. La contrainte de la couche A est nulle ou négative. Dans ce dernier cas, la couche se trouve en compression. Cette contrainte en compression varie de préférence de 0 à -500 MPa, mieux de - 20 à -500 MPa, encore mieux de -50 à -500 MPa. La contrainte en compression optimale varie de -150 à -400 MPa et mieux de -200 à -400 MPa. Elle est mesurée à la température de 20°C et sous 50 % d'humidité relative de la façon décrite ci-dessous. Ce sont les conditions de dépôt de l'invention qui permettent de parvenir à cette contrainte.

Le principe de la mesure de contraintes est basé sur le suivi de la déformation d'un substrat mince. En connaissant la géométrie et les propriétés mécaniques du substrat, sa déformation et l'épaisseur de la couche déposée, on calcule les contraintes à l'aide de la formule de Stoney. La contrainte $\sigma_{tot}$ est obtenue en mesurant la courbure de substrats polis pratiquement plan en silicium (100) ou en verre minéral avant et après dépôt d'une monocouche selon l'invention, ou d'un empilement interférentiel complet sur une face du substrat présentant une très légère concavité puis en calculant la valeur de contrainte à partir de la formule de Stoney:

$$\sigma = \frac{1}{6R}\frac{E_S\, d_S^2}{(1-\nu_S)\, d_f} \qquad (1)$$

dans laquelle $\frac{E_S}{(1-\nu_S)}$ est le module élastique biaxial du substrat, $d_s$ est l'épaisseur du substrat (m), $d_f$ est l'épaisseur du film (m), $E_s$ est le module d'Young du substrat (Pa), $v_s$ est le coefficient de Poisson du substrat,
et

$$R = \frac{R_1 R_2}{R_1 - R_2} \qquad (2)$$

dans laquelle $R_1$ est le rayon de courbure mesuré du substrat avant dépôt, $R^2$ est le rayon de courbure mesuré du substrat revêtu du film après dépôt. La courbure est mesurée au moyen d'un appareil FLX 2900 (Flexus) de Tencor. Un laser de Class IIIa de puissance 4 milliwatts (mW) à 670 nm est utilisé pour la mesure. L'appareil permet la mesure de contraintes internes en fonction du temps ou de la température (température maximum de 900ºC).

Les paramètres suivants sont utilisés pour calculer la contrainte : Module élastique biaxial du Si : 180 GPa ; Epaisseur du substrat en Si : 300 microns ; Longueur de balayage (Scan) : 40 mm ; Epaisseur du film déposé (mesure par ellipsométrie) : 200-500 nm. Les mesures sont faites à température ambiante à l'air.

Pour déterminer la contrainte d'un revêtement interférentiel, on déposera le revêtement sur un même substrat adapté, et on procède de la même façon. La contrainte du revêtement interférentiel selon l'invention varie en général de 0 à -400 MPa, de préférence de -50 à -300 MPa, mieux de -80 à -250 MPa, et encore mieux de -100 à -200 MPa.

Les couches A de l'invention possèdent des allongements à la rupture supérieurs à ceux des couches inorganiques, et peuvent donc subir des déformations sans se fissurer. De ce fait, l'article selon l'invention possède une résistance accrue à la courbure, comme cela est démontré dans la partie expérimentale.

La température critique d'un article revêtu selon l'invention est de préférence supérieure ou égale à 80°C, mieux supérieure ou égale à 90°C encore mieux supérieure ou égale à 100°C. Dans la présente demande, la température crtique d'un article ou d'un revêtement est définie comme étant celle à partir de laquelle on observe l'apparition de craquelures dans l'empilement présent à la surface du substrat, ce qui traduit une dégradation du revêtement. Cette température critique élevée est due à la présence de la couche A à la surface de l'article, comme démontré dans la partie expérimentale. Sans vouloir donner d'interprétation limitative à l'invention, les inventeurs pensent que, outre la nature de la couche, l'utilisation de couches A, en permettant d'augmenter la contrainte en compression de l'ensemble de l'empilement, améliore la température critique de l'article.

Grâce à ses propriétés thermomécaniques améliorées, la couche A, faisant partie ou non d'un revêtement interférentiel, peut notamment être appliqué sur une seule face d'une lentille semi-finie, généralement sa face avant, l'autre face de cette lentille devant encore être usinée et traitée. L'empilement présent sur la face avant de la lentille ne sera pas dégradé par l'accroissement de température générée par les traitements que subira la face arrière lors du durcissement des revêtements qui auront été déposés sur cette face arrière ou toute autre action susceptible d'augmenter la température de la lentille.

Selon un mode de réalisation préféré, le revêtement interférentiel de l'invention est un revêtement antireflet comprenant, dans l'ordre de dépôt sur la surface du substrat éventuellement revêtu, une couche de $ZrO_2$, généralement de 10 à 40 nm d'épaisseur et préférentiellement de 15 à 35 nm, une couche de $SiO_2$, généralement de 10 à 40 nm d'épaisseur et préférentiellement de 15 à 35 nm, une couche de $ZrO_2$ ou de $TiO_2$, généralement de 40 à 150 nm d'épaisseur, préférentiellement de 50 à 120 nm, une couche d'ITO, généralement de 1 à 15 nm d'épaisseur et préférentiellement de 2 à 10 nm, et une couche A selon l'invention, généralement de 50 à 150 nm d'épaisseur et préférentiellement de 60 à 100 nm.

De préférence, le facteur moyen de réflexion dans le domaine visible (400-700 nm) d'un article revêtu d'un revêtement interférentiel selon l'invention, noté $R_m$, est inférieur à 2,5 % par face, mieux inférieur à 2 % par face et encore mieux inférieur à 1 % par face de l'article. Dans un mode de réalisation optimal, l'article comprend un substrat dont les deux surfaces principales sont revêtues d'un revêtement interférentiel selon l'invention et présente une valeur de $R_m$ totale (cumul de réflexion due aux deux faces) inférieure à 1%. Les moyens pour parvenir à de telles valeurs de $R_m$ sont connus de l'homme du métier.

Le facteur de réflexion lumineux $R_v$ d'un revêtement interférentiel selon l'invention est inférieur à 2,5 % par face, de préférence inférieur à 2 % par face, mieux inférieur à 1 % par face de l'article, mieux $\leq$ 0,75 %, mieux encore $\leq$ 0,5 %.

Dans la présente demande, le "facteur moyen de réflexion" $R_m$ (moyenne de la réflexion spectrale sur l'ensemble du spectre visible entre 400 et 700 nm) et le facteur de réflexion lumineux $R_v$ sont tels que définis dans la norme ISO 13666:1998, et mesurés conformément à la norme ISO 8980-4.

Dans certaines applications, il est préférable que la surface principale du substrat soit revêtue d'un ou plusieurs revêtements fonctionnels préalablement au dépôt de la couche A ou du revêtement multicouche comprenant la couche A en tant que couche externe. Ces revêtements fonctionnels classiquement utilisés en optique peuvent être, sans limitation, une couche de primaire améliorant la résistance au choc et/ou l'adhésion des couches ultérieures dans le produit final, un revêtement anti-abrasion et/ou anti-rayures, un revêtement polarisé, un revêtement photochrome ou un revêtement coloré, en particulier une couche de primaire revêtue d'une couche anti-abrasion et/ou anti-rayures. Ces deux derniers revêtements sont décrits plus en détail dans les demandes WO 2008/015364 et WO 2010/109154.

L'article selon l'invention comporte un revêtement B externe hydrophobe, directement déposé sur la couche A, capable de modifier ses propriétés de surface, tel qu'un revêtement hydrophobe et/ou oléophobe (synonyme de top coat ou revêtement antisalissure dans la présente demande). Son épaisseur est en général inférieure ou égale à 10 nm, de préférence de 1 à 10 nm, mieux de 1 à 5 nm. Il est décrit dans les demandes WO 2009/047426. Le revêtement B externe hydrophobe peut être un revêtement monocouche ou multicouche, de préférence monocouche. Dans le cas où le revêtement B comprend plusieurs couches, la couche A est en contact direct avec la couche interne du revêtement B, c'est-à-dire la couche du revêtement B la plus proche du substrat dans l'ordre d'empilement.

Les revêtements hydrophobes et/ou oléophobes sont définis comme des revêtements dont l'angle de contact statique avec de l'eau désionisée est supérieur ou égal à 75°, de préférence supérieur ou égal à 90°, et mieux supéreur ou égal à 100°. L'angle de contact statique peut être déterminé selon la méthode de la goutte de liquide, selon laquelle une goutte de liquide ayant un diamètre inférieur à 2 mm est déposée doucement sur une surface solide non absorbante et l'angle à l'interface entre le liquide et la surface solide est mesuré.

Le revêtement hydrophobe et/ou oléophobe est de préférence un revêtement organique, préférentiellement comprenant au moins un composé fluoré, mieux au moins un composé de nature silane et/ou silazane porteur d'un ou de plusieurs groupes fluorés (nommé fluorosilane ou fluorosilazane), en particulier des groupes hydrocarbonés fluorés,

voire perfluorés.

Il peut être obtenu par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US 5,081,192, US 5,763,061, US 6,183, 872, US 5,739, 639, US 5,922,787, US 6,337,235, US 6,277,485 et EP 0933377. De tels composés sont capables de subir, lorsqu'ils sont déposés sur une surface, des réactions de polymérisation et/ou de réticulation, directement ou après hydrolyse.

De préférence, le revêtement externe hydrophobe et/ou oléophobe a une énergie de surface égale ou inférieure à 14 mJ/m$^2$, de préférence égale ou inférieure à 13 mJ/m$^2$, mieux égale ou inférieure à 12 mL/m$^2$. L'énergie de surface est calculée selon la méthode Owens-Wendt décrite dans la référence : « Estimation of the surface force energy of polymers » Owens D. K., Wendt R. G. (1969), J. Appl. Polym. Sci., 13, 1741-1747.

Des composés utilisables pour obtenir de tels revêtements antisalissures sont décrits dans les brevets JP 2005187936 et US 6183872.

Des compositions commerciales permettant de préparer des revêtements hydrophobes et/ou oléophobes sont les compositions KY130® (répondant à la formule du brevet JP 2005-187936) et KP 801 M® commercialisées par Shin-Etsu Chemical, et la composition OPTOOL DSX® (une résine fluorée comprenant des groupes perfluoropropylène répondant à la formule du brevet US 6,183,872) commercialisée par Daikin Industries. La composition OPTOOL DSX® est la composition de revêtement antisalissure préférée.

Typiquement, un article selon l'invention comprend un substrat successivement revêtu d'une couche de primaire d'adhésion et/ou antichoc, d'un revêtement anti-abrasion et/ou anti-rayure, d'un revêtement interférentiel selon l'invention, optionnellement antistatique, possédant la couche A en tant que couche externe, et d'un revêtement hydrophobe et/ou oléophobe.

Les inventeurs ont constaté que l'utilisation spécifique des composés précurseurs C selon l'invention plutôt que de composés précurseurs tels que l'OMCTS, l'hexaméthyldisiloxane, le décaméthyltétrasiloxane ou le décaméthylcyclopentasiloxane permettait au revêtement B externe hydrophobe de présenter des performances satisfaisantes, bien que la couche organique A se trouve en contact direct avec ledit revêtement B externe hydrophobe.

Sans vouloir être liés par une théorie, les inventeurs pensent que la présence de liaisons Si-X (X ayant la signification indiquée ci-dessus), dans le composé précurseur C est déterminante pour l'obtention de ce résultat, ces liaisons Si-X étant moins stables que les liaisons Si-C, notamment plus sujettes à l'oxydation et l'hydrolyse en présence d'oxygène et de l'eau présente dans l'air ambiant. Il est supposé qu'une partie au moins de la structure moléculaire du précurseur C serait conservée intègre lors du procédé de dépôt de la couche A, en raison du procédé particulier mis en oeuvre pour le dépôt de ce précurseur. De ce fait, des structures constitutives de la molécule de précurseur persisteraient dans la couche A, en particulier à la surface de la couche déposée.

Selon cette hypothèse, les couches A obtenues à partir des précurseurs C selon l'invention comporteraient en surface une certaine proportion de liaisons réactives pendantes Si-X. Les liaisons Si-X une fois exposées à l'air et l'humidité ambiante pourraient former des sites réactifs Si-OH, favorables à l'accroche des molécules de la couche supérieure (généralement un revêtement antisalissure). En revanche, les couches organiques formées dans les mêmes conditions à partir de précurseurs tels que l'OMCTS, l'hexaméthyldisiloxane, le décaméthyltétrasiloxane ou le décaméthylcyclopentasiloxane possèderaient uniquement des liaisons pendantes Si-alkyle. Ces groupements étant hydrophobes et stables, leur présence ne favorise pas a priori les réactions d'hydrolyse et de condensation nécessaires au greffage des molécules précurseurs du revêtement ultérieur.

Un autre avantage des composés précurseurs C selon l'invention par rapport à des précurseurs tels que l'OMCTS, l'hexaméthyldisiloxane, le décaméthyltétrasiloxane ou le décaméthylcyclopentasiloxane est l'obtention d'empilements ne comportant pas de défauts cosmétiques, pour une plage de conditions de dépôt étendue, et ceux même sur des empilements plus enclins à développer des défauts cosmétiques.

En outre, dans le cas d'un empilement interférentiel, le fait que la couche A constitue la couche externe de cet empilement est particulièrement avantageux car ceci permet d'augmenter la résistance à l'abrasion et à la rayure, et diminue donc notamment le nombre de rayures pouvant conduire à l'apparition de fissures dans le revêtement interférentiel.

L'invention concerne également un procédé de fabrication d'un article tel que défini ci-dessus, comprenant au moins les étapes suivantes :

- fournir un article comprenant un substrat ayant au moins une surface principale,
- déposer sur ladite surface principale du substrat une couche A,
- déposer directement sur ladite couche A un revêtement B externe hydrophobe,
- récupérer un article comprenant un substrat ayant une surface principale revêtue de ladite couche A en contact direct avec le revêtement B externe hydrophobe, ladite couche A ayant été obtenue par dépôt, sous faisceau d'ions, d'espèces activées issues d'au moins un composé C, sous forme gazeuse, contenant dans sa structure au moins

un groupe Si-X, où X est un groupe hydroxy ou un groupe hydrolysable choisi parmi les groupes H, halogène, alcoxy, aryloxy, acyloxy, -$NR^1R^2$ où $R^1$ et $R^2$ désignent indépendamment un atome d'hydrogène, un groupe alkyle ou un groupe aryle, et -N($R^3$)-Si où $R^3$ désigne un groupe alkyle ou un groupe aryle, au moins un atome de carbone, au moins un atome d'hydrogène, et, optionnellement au moins un atome d'azote et/ou au moins un atome d'oxygène, ladite couche A n'étant pas formée à partir de composés précurseurs inorganiques.

L'invention est illustrée, de façon non limitative, par les exemples suivants. Sauf indication contraire, les indices de réfraction sont donnés pour une longueur d'onde de 630 nm et T = 20-25°C.

EXEMPLES

1. Procédures générales

Les articles employés dans les exemples comprennent un substrat de lentille ORMA® ESSILOR de 65 mm de diamètre, de puissance -2,00 dioptries et d'épaisseur 1,2 mm (sauf pour les tests d'évaluation de la présence éventuelle de défauts cosmétiques, réalisés sur le substrat thiouréthane MR8 de la société Mitsui Toatsu Chemicals Inc. d'indice de réfraction 1,59, toutes choses étant égales par ailleurs), revêtu sur sa face concave du revêtement de primaire antichoc et du revêtement anti-abrasion et anti-rayures (hard coat) divulgués dans la partie expérimentale de la demande WO 2010/109154, d'un revêtement antireflet et du revêtement antisalissure divulgué dans la partie expérimentale de la demande WO 2010/109154.

Les couches du revêtement antireflet ont été déposées sans chauffage des substrats par évaporation sous vide, éventuellement, lorsque précisé, assistée par faisceau d'ions oxygène et éventuellement argon pendant le dépôt (source d'évaporation : canon à électrons).

Le bâti de dépôt sous vide est une machine Leybold LAB 1100 + équipée d'un canon à électrons pour l'évaporation des matériaux précurseurs, d'un évaporateur thermique, d'un canon à ions KRI EH 1000 F (de la société Kaufman & Robinson Inc.) pour la phase préliminaire de préparation de la surface du substrat par des ions argon (IPC), ainsi que pour le dépôts de la couche A ou de couches sous assistance ionique (IAD), et d'un système d'introduction de liquide, utilisé lorsque le composé précurseur de la couche A est un liquide dans les conditions normales de température et de pression (cas du TMCTS). Ce système comprend un réservoir contenant le composé précurseur liquide de la couche A, des résistances pour chauffer le réservoir et les tubes reliant le réservoir de précurseur liquide à la machine de dépôt sous vide, un débitmètre pour la vapeur de la société MKS (MKS1150C), porté à une température de 30-150°C lors de son utlisation, selon le débit de précurseur vaporisé, qui varie de préférence de 10 à 50 sccm. La vapeur de précurseur sort d'un tuyau à l'intérieur de la machine, à une distance d'environ 30 cm du canon à ions. Des débits d'oxygène et éventuellement d'argon sont introduits à l'intérieur du canon à ions. Préférentiellement, il n'est pas introduit d'argon ni aucun autre gaz rare à l'intérieur du canon à ions.

Les couches A selon l'invention sont formées par évaporation sous bombardement ionique de composé TMCTS.

L'épaisseur des couches déposées a été contrôlée en temps réel au moyen d'une microbalance à quartz. Sauf indication contraire, les épaisseurs mentionnées sont des épaisseurs physiques. Plusieurs échantillons de chaque verre ont été préparés.

2. Modes opératoires

Le procédé de préparation des articles d'optique selon l'invention comprend l'introduction du substrat revêtu du revêtement de primaire et du revêtement anti-abrasion définis ci-dessus dans l'enceinte de dépôt sous vide, une étape de préchauffage du vaporiseur, des tubes et du débitmètre à vapeur à la température choisie (~ 20 min), une étape de pompage primaire, puis de pompage secondaire pendant 400 s permettant l'obtention d'un vide secondaire (~2. $10^{-5}$ mbar, pression lue sur une jauge Bayard-Alpert), une étape d'activation de la surface du substrat par un faisceau d'ions argon (IPC : 1 minute, 100 V, 1 A, le canon à ions étant arrêté à la fin de cette étape), puis le dépôt par évaporation des couches inorganiques suivantes à l'aide du canon à électrons jusqu'à l'obtention de l'épaisseur désirée pour chaque couche :

- une couche de $ZrO_2$ de 20 nm d'épaisseur,
- une couche de $SiO_2$ de 25 nm d'épaisseur,
- une couche de $ZrO_2$ de 80 nm d'épaisseur,
- une couche électriquement conductrice d'ITO déposée sous assistance d'ions oxygène de 6 nm d'épaisseur.

Le dépôt de la couche A sur la couche d'ITO est ensuite réalisé de la façon suivante.

Le canon à ions est alors démarré avec de l'argon, de l'oxygène est ajouté dans le canon à ions, avec un débit

programmé (20 sccm), Le débit d'argon est coupé, le courant d'anode souhaité est programmé (3 A) et le composé TMCTS est introduit dans l'enceinte (débit programmé à 20 sccm). (Récapitulatif conditions de dépôt (débits) : TMCTS : 20 sccm ; Ar : 0 sccm, $O_2$ : 20 sccm, courant 3A).

D'une manière générale, le procédé selon l'invention est effectué avec de l'oxygène ($O_2$) dans le canon à ions, en l'absence de gaz rare introduit dans le canon à ions.

L'alimentation en composé TMCTS est arrêtée une fois l'épaisseur souhaitée obtenue, puis le canon à ions est éteint.

Dans l'exemple 1, une couche de revêtement antisalissure (top coat) à base d'Optool DSX™ de la société Daikin de l'ordre de 5 nm est déposée directement sur une couche A de 85 nm d'épaisseur, qui constitue la couche externe du revêtement antireflet.

Enfin, une étape de ventilation est réalisée.

L'exemple comparatif 1 diffère de l'empilement selon l'invention en ce que la couche A est remplacée par une couche de silice de même épaisseur (85 nm).

L'exemple comparatif 2 diffère de l'empilement selon l'invention en ce que la couche A est remplacée par une couche de même épaisseur (85 nm) obtenue dans les mêmes conditions par évaporation sous bombardement ionique du composé OMCTS (octaméthylcyclotétrasiloxane, qui ne possède aucune liaison Si-groupe hydrolysable) fourni par la société ABCR, en lieu et place du composé TMCTS. L'article de l'exemple comparatif 2 est conforme à ceux faisant l'objet de la demande PCT/FR 12053092.

## 3. Caractérisations

La résistance à l'abrasion a été évaluée par détermination des valeurs BAYER ASTM (Bayer sable) sur les substrats revêtus du revêtement antireflet et du revêtement anti-salissure selon les méthodes décrites dans la demande WO 2008/001011 (norme ASTM F 735.81). Plus la valeur obtenue au test BAYER est élevée, plus la résistance à l'abrasion est élevée. Ainsi, la valeur de Bayer ASTM (Bayer sable) est qualifiée de bonne lorsqu'elle est supérieure ou égale à 3,4 et inférieure à 4,5 et d'excellente pour des valeurs de 4,5 et plus.

La température critique de l'article est mesurée de la façon indiquée dans la demande WO 2008/001011, 24 heures après la préparation de cet article.

Le test de résistance à la courbure permet d'évaluer la capacité d'un article possédant une courbure à subir une déformation mécanique. Ce test s'effectue sur un verre initialement sphérique qui a été débordé à la forme d'un rectangle de dimension 50 x 25 mm. Le mode de sollicitation de ce test est représentatif de la sollicitation chez l'opticien pour le montage du verre, c'est-à-dire la "compression" du verre pour l'insérer dans une monture métallique. Ce test utilise un banc Instron pour appliquer au verre une déformation de façon contrôlée, des diodes électroluminescentes (LED) pour illuminer le verre, une caméra et un logiciel d'analyse d'images. Le verre revêtu est comprimé par le banc Instron, par application de forces exercées suivant l'axe de la longueur principale du verre débordé jusqu'à l'apparition de fissures perpendiculaires au sens de déplacement dans le revêtement antireflet, détectées par analyse de l'image en transmission. Le résultat du test est la déformation critique D en mm que peut subir le verre avant l'apparition de fissures, représenté sur la figure 1. Ce test est réalisé un mois après la préparation des verres. Plus la valeur de la déformation est élevée, meilleure est la résistance à la déformation mécanique appliquée.

D'une manière générale, les revêtements interférentiels selon l'invention ont des valeurs de déformation critique variant de 0,7 à 1,2 mm, mieux de 0,8 mm à 1,2 mm et encore mieux de 0,9 à 1,2 mm.

La présence éventuelle de défauts cosmétiques des articles d'optiques (articles selon l'invention ou comparatifs) est évaluée visuellement sous une lampe à arc (lampe haute intensité), après stockage des articles dans des conditions tropicales dans une enceinte "climatique" régulée à 40°C avec 80 % d'humidité relative à pression atmosphérique, et pendant une durée déterminée (t0 + 1 semaine ou t0 + 1 mois, le temps de référence t0 correspondant à 1 jour après la préparation des articles). Par pression atmosphérique, on entend une pression de 1,01325 Bar. Ces conditions de stockage permettent de faire vieillir prématurément les articles d'optique et d'accélérer l'apparition éventuelle de défauts cosmétiques. Les défauts visibles à la lampe à arc se présentent sous la forme de points ou de petits filaments. Il s'agit de défauts optiques localisés. Bien que les plus prononcés soient visibles à l'oeil nu par réflexion en angle rasant, leur observation est facilitée par l'utilisation d'une lampe à arc.

Le test d'adhésion permet d'évaluer les propriétés d'adhésion du revêtement en effectuant un traitement au trempé dans l'eau chaude suivi d'une sollicitation mécanique de surface. Plus le résultat obtenu est élevé, meilleure est l'adhésion.

Le test d'encre permet d'évaluer la performance du revêtement antisalissure. Ce test consiste à tracer une ligne avec le feutre "Magic ink" n°500 de la société Teranishi Chemical Industries Ltd, et à évaluer ensuite la trace laissée sur le verre. Quand l'encre se retracte rapidement (< 3s) en petites gouttelettes, on considère que le résultat est "conforme". Quand la trace est continue ou présente des intervalles continus, on considère le résultat "non-conforme".

4. Résultats

Les tableaux ci-dessous indiquent pour chacun des exemples et exemples comparatifs les résultats des tests auxquels ont été soumis les articles préparés.

| Exemple | Bayer sable | Température critique (°C) | Test d'adhésion | Test de résistance à la courbure, déformation en mm avant craquelure | Test d'encre |
|---|---|---|---|---|---|
| 1 | 6 | 110 | 4,9 | 0,9 | conforme |
| Comparatif 1 | 4,5 | 70 | 5 | **0,6** | conforme |
| Comparatif 2 | 7,5 | 100 | 4,3 | 0,9 | Non-conforme |

Présence éventuelle de défauts cosmétiques

| Exemple | t0 (température et humidité ambiantes) | t0 + 1 semaine de stockage tropical | t0 + 1 mois de stockage tropical |
|---|---|---|---|
| 1 | non | non | oui pour 1 verre sur 2 |
| Comparatif 1 | non | non | non |
| Comparatif 2 | léger | **oui** | **oui** |

L'article selon l'invention présente une température critique améliorée et une amélioration significative de la déformation en courbure qu'il peut subir avant l'apparition de fissures par rapport à celui de l'exemple comparatif 1. Ces améliorations sont directement attribuables à la présence d'une couche A dans l'empilement antireflet. On peut constater qu'il n'est pas nécessaire que toutes les couches du revêtement antireflet soient des couches de nature organique comme la couche A pour obtenir une amélioration du comportement du produit vis-à-vis des sollicitations thermomécaniques.

L'article selon l'invention possède un revêtement antisalissure plus performant que celui de l'exemple comparatif 2 et aussi performant que celui déposé sur une couche de silice (exemple comparatif 1), comme le révèle le test d'encre, tout en conservant de bonnes propriétés mécaniques. Il est à noter que l'utilisation d'autres précurseurs tels que l'hexaméthyldisiloxane, le décaméthyltétrasiloxane ou le décaméthylcyclopentasiloxane, qui comme l'OMCTS ne possèdent pas de liaisons Si-groupe hydrolysable, conduisent à des performances de revêtement antisalissure inférieures à celles obtenues en utilisant une couche A selon l'invention. En outre, l'article selon l'invention présente une aptitude limitée à développer dans le temps des défauts cosmétiques, alors que celui de l'exemple comparatif 2 présente de tels défauts au bout d'un temps relativement court après sa préparation.

## Revendications

1. Article comprenant un substrat ayant au moins une surface principale revêtue d'une couche A en contact direct avec un revêtement B externe hydrophobe, **caractérisé en ce que** ladite couche A a été obtenue par dépôt, sous faisceau d'ions, d'espèces activées issues d'au moins un composé C, sous forme gazeuse, contenant dans sa structure :

   - au moins un atome de carbone,
   - au moins un atome d'hydrogène,
   - au moins un groupe Si-X, où X est un groupe hydroxy ou un groupe hydrolysable choisi parmi les groupes H, halogène, alcoxy, aryloxy, acyloxy, $-NR^1R^2$ où $R^1$ et $R^2$ désignent indépendamment un atome d'hydrogène, un groupe alkyle ou un groupe aryle, et $-N(R^3)-Si$ où $R^3$ désigne un groupe alkyle ou un groupe aryle, et,
   - optionnellement au moins un atome d'azote et/ou au moins un atome d'oxygène,

   ledit composé C n'étant ni le tétraméthyldisiloxane, ni le tétraéthoxysilane, ni le vinylméthyldiéthoxysilane, ni l'hexaméthylcyclotrisilazane, ladite couche A n'étant pas formée à partir de composés précurseurs inorganiques.

2. Article selon la revendication 1, **caractérisé en ce que** le faisceau d'ions est émis par un canon à ions.

3. Article selon l'une quelconque des revendications précédentes, **caractérisé en ce que** le composé C comporte au moins une liaison Si-C.

4. Article selon l'une quelconque des revendications précédentes, **caractérisé en ce que** l'atome de silicium du groupe Si-X est directement lié à au moins un atome de carbone, de préférence à au moins un groupe alkyle.

5. Article selon l'une quelconque des revendications précédentes, **caractérisé en ce que** le composé C comporte au moins un groupe de formule :

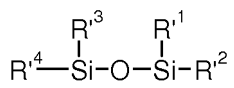

où $R'^1$ à $R'^4$ désignent indépendamment des groupes alkyle, vinyle, aryle ou un groupe X, l'un au moins de $R'^1$ à $R'^4$ désignant un groupe X, X étant tel que défini dans la revendication 1.

6. Article selon l'une quelconque des revendications 1 à 4, **caractérisé en ce que** le composé C est un composé de formule :

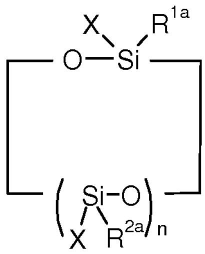

où X tel que défini dans la revendication 1, n désigne un entier allant de 2 à 20, $R^{1a}$ et $R^{2a}$ représentent indépendamment un groupe alkyle, vinyle, aryle ou un groupe hydrolysable.

7. Article selon l'une quelconque des revendications précédentes, **caractérisé en ce que** la couche A a une épaisseur allant de 20 à 150 nm.

8. Article selon l'une quelconque des revendications précédentes, **caractérisé en ce que** le groupe Si-X est un groupe Si-H.

9. Article selon l'une quelconque des revendications précédentes, **caractérisé en ce que** la couche A possède un indice de réfraction inférieur ou égal à 1,55.

10. Article selon la revendication 9, **caractérisé en ce que** la couche A constitue la couche externe d'un revêtement interférentiel multicouche.

11. Article selon la revendication 10, **caractérisé en ce que** le revêtement interférentiel est un revêtement antireflet.

12. Article selon l'une quelconque des revendications 10 ou 11, **caractérisé en ce que** le revêtement interférentiel comporte des couches de bas indice de réfraction ayant un indice de réfraction inférieur ou égal à 1,55 et **en ce que** toutes ces couches de bas indice de réfraction sont de nature inorganique à l'exception de la couche A.

13. Article selon l'une quelconque des revendications 10 à 12, **caractérisé en ce que** toutes les couches du revêtement interférentiel sont de nature inorganique, à l'exception de la couche A.

14. Article selon l'une quelconque des revendications précédentes, **caractérisé en ce que** l'atome de silicium du groupe

Si-X n'est pas lié à plus de deux groupes non hydrolysables.

**15.** Article selon l'une quelconque des revendications précédentes, **caractérisé en ce qu'**il est une lentille optique, de préférence une lentille ophtalmique.

**16.** Procédé de fabrication d'un article selon l'une quelconque des revendications précédentes, comprenant au moins les étapes suivantes :

- fournir un article comprenant un substrat ayant au moins une surface principale,
- déposer sur ladite surface principale du substrat une couche A,
- déposer directement sur ladite couche A un revêtement B externe hydrophobe
- récupérer un article comprenant un substrat ayant une surface principale revêtue de ladite couche A en contact direct avec le revêtement B externe hydrophobe, ladite couche A ayant été obtenue par dépôt, sous faisceau d'ions, d'espèces activées issues d'au moins un composé C, sous forme gazeuse, contenant dans sa structure :

  - au moins un atome de carbone,
  - au moins un atome d'hydrogène,
  - au moins un groupe Si-X, où X est un groupe hydroxy ou un groupe hydrolysable choisi parmi les groupes H, halogène, alcoxy, aryloxy, acyloxy, $-NR^1R^2$ où $R^1$ et $R^2$ désignent indépendamment un atome d'hydrogène, un groupe alkyle ou un groupe aryle, et $-N(R^3)-Si$ où $R^3$ désigne un groupe alkyle ou un groupe aryle, et,
  - optionnellement au moins un atome d'azote et/ou au moins un atome d'oxygène,

ledit composé C n'étant ni le tétraméthyldisiloxane, ni le tétraéthoxysilane, ni le vinylméthyldiéthoxysilane, ni l'hexaméthylcyclotrisilazane, ladite couche A n'étant pas formée à partir de composés précurseurs inorganiques.

## Patentansprüche

**1.** Gegenstand, umfassend ein Substrat mit mindestens einer Hauptoberfläche, die mit einer Schicht A in direktem Kontakt mit einer äußeren hydrophoben Beschichtung B beschichtet ist, **dadurch gekennzeichnet, dass** die Schicht A erhalten worden ist durch ionenstrahlgestützte Abscheidung von aktivierten Spezies, die von mindestens einer gasförmigen Verbindung C stammen, die in ihrer Struktur Folgendes enthält:

- mindestens ein Kohlenstoffatom,
- mindestens ein Wasserstoffatom,
- mindestens eine Gruppe Si-X, wobei X eine Hydroxygruppe oder eine hydrolysierbare Gruppe ist, die aus den Gruppen H, Halogen, Alkoxy, Aryloxy, Acyloxy,
- $NR^1R^2$, wobei $R^1$ und $R^2$ unabhängig für ein Wasserstoffatom, eine Alkylgruppe oder eine Arylgruppe stehen, und $-N(R^3)-Si$, wobei $R^3$ für eine Alkylgruppe oder eine Arylgruppe steht, ausgewählt ist, und
- gegebenenfalls mindestens ein Stickstoffatom und/oder mindestens ein Sauerstoffatom,

wobei es sich bei der Verbindung C weder um Tetramethyldisiloxan noch Tetraethoxysilan noch Vinylmethyldiethoxysilan noch Hexamethylcyclotrisilazan handelt, wobei die Schicht A nicht aus anorganischen Vorläuferverbindungen hergestellt wird.

**2.** Gegenstand nach Anspruch 1, **dadurch gekennzeichnet, dass** der Ionenstrahl von einer Ionenkanone emittiert wird.

**3.** Gegenstand nach einem der vorhergehenden Ansprüche, **dadurch gekennzeichnet, dass** die Verbindung C mindestens eine Bindung Si-C enthält.

**4.** Gegenstand nach einem der vorhergehenden Ansprüche, **dadurch gekennzeichnet, dass** das Siliziumatom der Gruppe Si-X direkt an mindestens ein Kohlenstoffatom, vorzugsweise an mindestens eine Alkylgruppe gebunden ist.

**5.** Gegenstand nach einem der vorhergehenden Ansprüche, **dadurch gekennzeichnet, dass** die Verbindung C mindestens eine Gruppe der folgenden Formel enthält:

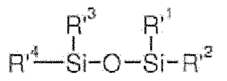 ,

worin $R'^1$ bis $R'^4$ unabhängig für Alkyl-, Vinyl-, Arylgruppen oder eine Gruppe X stehen, wobei mindestens einer der Reste $R^1$ bis $R^4$ für eine Gruppe X steht, wobei X wie in Anspruch 1 definiert ist.

6. Gegenstand nach einem der Ansprüche 1 bis 4, **dadurch gekennzeichnet, dass** die Verbindung C eine Verbindung der folgenden Formel ist:

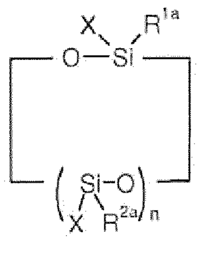 ,

wobei X wie in Anspruch 1 definiert ist, n für eine ganze Zahl von 2 bis 20 steht, $R^{1a}$ und $R^{2a}$ unabhängig für eine Alkyl-, Vinyl-, Aryl- oder eine hydrolysierbare Gruppe stehen.

7. Gegenstand nach einem der vorhergehenden Ansprüche, **dadurch gekennzeichnet, dass** die Schicht A eine Dicke von 20 bis 150 nm besitzt.

8. Gegenstand nach einem der vorhergehenden Ansprüche, **dadurch gekennzeichnet, dass** die Gruppe Si-X eine Gruppe Si-H ist.

9. Gegenstand nach einem der vorhergehenden Ansprüche, **dadurch gekennzeichnet, dass** die Schicht A einen Brechungsindex unter oder gleich 1,55 besitzt.

10. Gegenstand nach Anspruch 9, **dadurch gekennzeichnet, dass** die Schicht A die äußere Schicht einer mehrschichtigen Interferenzbeschichtung bildet.

11. Gegenstand nach Anspruch 10, **dadurch gekennzeichnet, dass** die Interferenzbeschichtung eine Entspiegelungsbeschichtung ist.

12. Gegenstand nach einem der Ansprüche 10 oder 11, **dadurch gekennzeichnet, dass** die Interferenzbeschichtung Schichten mit niedrigem Brechungsindex umfasst, die einen Brechungsindex von unter oder gleich 1,55 aufweisen, und dadurch, dass diese sämtlichen Schichten mit niedrigem Brechungsindex mit Ausnahme der Schicht A anorganischer Natur sind.

13. Gegenstand nach einem der Ansprüche 10 bis 12, **dadurch gekennzeichnet, dass** alle Schichten der Interferenzbeschichtung mit Ausnahme der Schicht A anorganischer Natur sind.

14. Gegenstand nach einem der vorhergehenden Ansprüche, **dadurch gekennzeichnet, dass** das Siliziumatom der Gruppe Si-X nicht an mehr als zwei nicht hydrolysierbare Gruppen gebunden ist.

15. Gegenstand nach einem der vorhergehenden Ansprüche, **dadurch gekennzeichnet, dass** es sich um eine optische Linse, vorzugsweise eine ophthalmische Linse handelt.

16. Verfahren zur Herstellung eines Gegenstands nach einem der vorhergehenden Ansprüche, das mindestens die folgenden Schritte umfasst:

- Bereitstellen eines Gegenstands, der ein Substrat mit mindestens einer Hauptoberfläche umfasst,
- Abscheiden einer Schicht A auf der Hauptoberfläche des Substrats,
- Abscheiden einer äußeren hydrophoben Beschichtung B direkt auf der Schicht A,

- Erhalten eines Gegenstands, umfassend ein Substrat mit einer Hauptoberfläche, die mit der Schicht A in direktem Kontakt mit der äußeren hydrophoben Beschichtung B beschichtet ist, wobei die Schicht A erhalten worden ist durch ionenstrahlgestützte Abscheidung von aktivierten Spezies, die von mindestens einer gasförmigen Verbindung C stammen, die in ihrer Struktur Folgendes enthält:

  - mindestens ein Kohlenstoffatom,
  - mindestens ein Wasserstoffatom,
  - mindestens eine Gruppe Si-X, wobei X eine Hydroxygruppe oder eine hydrolysierbare Gruppe ist, die aus den Gruppen H, Halogen, Alkoxy, Aryloxy, Acyloxy,
  - $NR^1R^2$, wobei $R^1$ und $R^2$ unabhängig für ein Wasserstoffatom, eine Alkylgruppe oder eine Arylgruppe stehen, und $-N(R^3)-Si$, wobei $R^1$ für eine Alkylgruppe oder eine Arylgruppe steht, ausgewählt ist, und
  - gegebenenfalls mindestens ein Stickstoffatom und/oder mindestens ein Sauerstoffatom,

wobei es sich bei der Verbindung C weder um Tetramethyldisiloxan noch Tetraethoxysilan noch Vinylmethyldiethoxysilan noch Hexamethylcyclotrisilazan handelt, wobei die Schicht A nicht aus anorganischen Vorläuferverbindungen hergestellt wird.

## Claims

**1.** An article comprising a substrate having at least one main surface coated with a layer A making direct contact with a hydrophobic external coating B, **characterized in that** said layer A is obtained by depositing, under an ion beam, activated species originating from at least one compound C, in gaseous form, containing in its structure:

- at least one carbon atom;
- at least one hydrogen atom;
- at least one Si-X group, where X is a hydroxy group or a hydrolyzable group chosen from the groups H, halogen, alkoxy, aryloxy, acyloxy, $-NR^1R^2$ where $R^1$ and $R^1$ designate independently a hydrogen atom, an alkyl group or an aryl group, and $-N(R^3)-Si$ where $R^3$ designates an alkyl group or an aryl group; and
- optionally at least one nitrogen atom and/or at least one oxygen atom,

said compound C being neither tetramethyldisiloxane, nor tetraethoxysilane, nor vinylmethyldiethoxysilane, nor hexamethylcyclotrisilazane and said layer A not being formed from inorganic precursor compounds.

**2.** The article as claimed in claim 1, **characterized in that** the ion beam is emitted by an ion gun.

**3.** The article as claimed in any one of the preceding claims, **characterized in that** the compound C contains at least one Si-C bond.

**4.** The article as claimed in either one of the preceding claims, **characterized in that** the silicon atom of the group Si-X is directly bonded to at least one carbon atom and preferably to at least one alkyl group.

**5.** The article as claimed in any one of the preceding claims, **characterized in that** the compound C contains at least one group of formula:

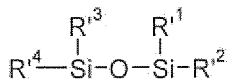

where $R'^1$ to $R'^4$ independently designate alkyl, vinyl or aryl groups or a group X, one at least of $R'^1$ to $R'^4$ designating a group X, X being such as defined in claim 1.

**6.** The article as claimed in any one of claims 1 to 4, **characterized in that** the compound C is a compound of formula:

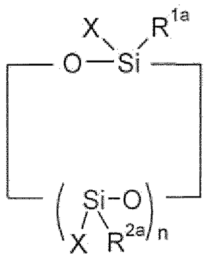

where X is such as defined in claim 1, n designates an integer ranging from 2 to 20 and $R^{1a}$ and $R^{2a}$ represent independently an alkyl, vinyl or aryl group or a hydrolyzable group.

**7.** The article as claimed in any one of the preceding claims, **characterized in that** the layer A has a thickness ranging from 20 to 150 nm.

**8.** The article as claimed in any one of the preceding claims, **characterized in that** the group Si-X is an Si-H group.

**9.** The article as claimed in any one of the preceding claims, **characterized in that** the layer A has a refractive index lower than or equal to 1.55.

**10.** The article as claimed in claim 9, **characterized in that** the layer A is the external layer of a multilayer interference coating.

**11.** The article as claimed in claim 10, **characterized in that** the interference coating is an antireflection coating.

**12.** The article as claimed in either one of claims 10 and 11, **characterized in that** the interference coating contains low refractive index layers having a refractive index lower than or equal to 1.55 and **in that** all these low refractive index layers are inorganic in nature except for the layer A.

**13.** The article as claimed in any one of claims 10 to 12, **characterized in that** all the layers of the interference coating are inorganic in nature, except for the layer A.

**14.** The article as claimed in either one of the preceding claims, **characterized in that** the silicon atom of the group Si-X is not bonded to more than two non-hydrolyzable groups.

**15.** The article as claimed in any one of the preceding claims, **characterized in that** it is an optical lens, preferably an ophthalmic lens.

**16.** A process for manufacturing an article as claimed in any one of the preceding claims, comprising at least the following steps:

- providing an article comprising a substrate having at least one main surface;
- depositing on said main surface of the substrate a layer A;
- depositing directly on said layer A a hydrophobic external coating B;
- obtaining an article comprising a substrate having a main surface coated with said layer A making direct contact with the hydrophobic external coating B, said layer A having been obtained by depositing, under an ion beam, activated species originating from at least one compound C, in gaseous form, containing in its structure:

    - at least one carbon atom;
    - at least one hydrogen atom;
    - at least one Si-X group, where X is a hydroxy group or a hydrolyzable group chosen from the groups H, halogen, alkoxy, aryloxy, acyloxy, $-NR^1R^2$ where $R^1$ and $R^2$ designate independently a hydrogen atom, an alkyl group or an aryl group, and $-N(R^3)-Si$ where $R^3$ designates an alkyl group or an aryl group; and
    - optionally at least one nitrogen atom and/or at least one oxygen atom,

said compound C being neither tetramethyldisiloxane, nor tetraethoxysilane, nor vinylmethyldiethoxysilane, nor hexamethylyclotrisilazane and said layer A not being formed from inorganic precursor compounds.

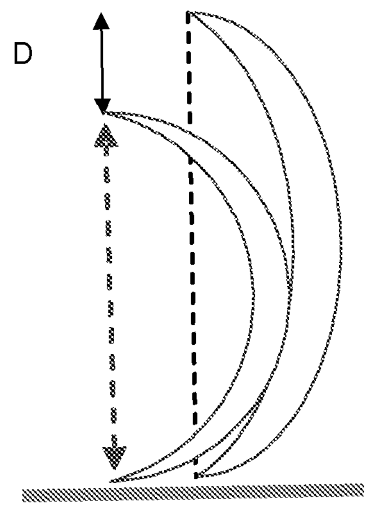


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 12053092 W
- US 6919134 B
- JP 2007078780 A
- JP 5323103 A
- WO 2008062142 A
- WO 2010109154 A
- US 5508368 A
- WO 2008015364 A
- WO 2009047426 A
- US 5081192 A
- US 5763061 A
- US 6183872 A
- US 5739639 A
- US 5922787 A
- US 6337235 B
- US 6277485 B
- EP 0933377 A
- JP 2005187936 B
- US 6183872 B
- JP 2005187936 A
- WO 2008001011 A

### Littérature non-brevet citée dans la description

- **OWENS D. K. ; WENDT R. G.** *J. Appl. Polym. Sci.,* 1969, vol. 13, 1741-1747